# EUROPEAN PATENT APPLICATION

(11) **EP 2 495 169 A2**
(43) Date of publication of application: **05.09.2012**
(21) Application number: 12156534.5
(22) Date of filing: 22.02.2012
(51) Int. Cl.: B64F 1/20

(54) **Precision approach path indicator**

(30) Priority: 04.03.2011 GB 201103731; 24.06.2011 US 201161500705 P
(71) Applicant: Aeronautical & General Instruments Limited, Poole, Dorset BH15 3SS (GB)
(72) Inventor: Walker, Duncan John William, Walton-on-Thames, Surrey KT12 4DA (GB)
(74) Representative: Adamson Jones

(57) **Abstract**

A Precision Approach Path Indicator (PAPI) unit comprises first and second light sources (366,367) and a projection lens assembly (40). Light emitted by the first and second light sources (366,367) is collected by first and second solid waveguides (37) respectively and is guided by said waveguides (37) to an intermediate plane. The intermediate plane is located in the focal plane of the projection lens assembly (40).

## Description

This invention relates to a visual navigational aid, and in particular to a Precision Approach Path Indicator (PAPI) system.

Precision Approach Path Indicator (PAPI) systems are used to assist the pilot of an aircraft on a landing approach to an airfield. In particular, the PAPI provides a visual indication of the correct glide slope. Typically, a PAPI system comprises four units that are positioned in a row alongside and perpendicular to the runway. Each unit transmits a beam of light that has two differently-coloured components, referred to as sectors, typically white above the horizontal centre line and red below. Two of the units are directed at an angle slightly greater than the optimum approach angle, and two of the units are directed at an angle that is slightly lower than the optimum approach angle. A pilot on the correct glide slope will see two red beams and two white beams. If the approach path is too steep, the beams all appear white; if the approach path is too low, the beams all appear red. Thus, the pilot is able to adjust the aircraft's altitude in order to maintain the desired combination of red and white beams, thereby optimising the angle of approach to landing. In certain circumstances, the use of a so-called "abbreviated" PAPI may be permitted, comprising just two units, but the principle of operation is the same as that of the normal, four-unit PAPI.

Authorities such as the Federal Aviation Authority (FAA) and International Civil Aviation Organisation (ICAO) apply strict standards to PAPI systems, imposing stringent requirements on such parameters as the dimensions and intensity of the transmitted light beams, and most importantly on the angular range over which the transition from white to red occurs.

Conventional PAPI systems have used incandescent light sources, or in some cases fluorescent or arc lamps. Such lamp-based systems suffer, however, from numerous disadvantages. Notable amongst these are the relatively short life span of the lamps, as well inefficient energy usage.

More recently, PAPI systems using light emitting diode (LED) light sources have been proposed. However, the use of such light sources is also not without problems. In particular, LED light sources emit light over a considerable range of angles and efficient collimation of the light into an effective beam is difficult. In consequence, there is an ongoing need for improved PAPI systems, in particular those based on LED or other non-incandescent light sources.

There has now been devised an improved PAPI system which addresses the above-mentioned and/or other disadvantages associated with the prior art.

According to a first aspect of the invention, there is provided a Precision Approach Path Indicator (PAPI) unit, said unit comprising first and second light sources and a projection lens assembly, wherein light emitted by the first and second light sources is collected by first and second solid waveguides respectively and is guided by said waveguides to an intermediate plane, said intermediate plane being located in the focal plane of the projection lens assembly.

In a further aspect of the invention, there is provided a Precision Approach Path Indicator (PAPI) system comprising a plurality of PAPI units according to the first aspect of the invention.

In the PAPI unit and system according to the invention, solid waveguides are used to channel light emitted by the light sources to an intermediate plane. The intermediate plane coincides with the focal plane of the projection lens assembly, which transmits the image formed at the intermediate plane into the far field, transforming position in the intermediate plane into angle in the far field. The use of solid waveguides to collect and channel light to the intermediate plane significantly reduces alignment tolerances of the light sources and associated optical components, greatly simplifying manufacture. The units are also easier to maintain, as they require little or no critical optical setup, so reducing downtime and leading to time and cost savings.

The dimensions of the waveguides may be such that their distal ends lie in the intermediate plane, ie the image at the intermediate plane that is projected into the far field by the projection lens assembly may be the image at the distal ends of the waveguides. In alternative embodiments, the intermediate plane may lie beyond the distal ends of the waveguides. In the latter case, it will generally be necessary for the light beams from the first and second light sources to be kept apart between the waveguides and the intermediate plane, eg by means of a physical partition.

As is conventional, the PAPI unit of the invention includes first and second light sources, corresponding to the two sectors that are fundamental to the operation of a PAPI system. The two sectors are visually distinguishable. In a PAPI system intended for conventional operation, the first and second light sources will emit differently coloured light, eg red and white light. The first and second light sources may be light sources that emit differently coloured light, or they may be similar or identical light sources, eg that emit white light, light from one or both being passed through a filter to create a visually distinguishable colour difference between the two sectors. For the avoidance of doubt, it should be made clear that more than two light sources may be employed, though for the operation of a conventional PAPI system it is only two light sources that are required.

Other forms of differentiation between the two sectors may also be employed. For instance, the light sources in one sector may emit continuously, while those in the other are intermittent. Such an arrangement may be useful in a PAPI system intended for night use, wherein the light sources are infra-red and are visualised using night vision equipment.

The light sources used in the PAPI unit of the invention are preferably non-incandescent light sources. Most preferably, the light sources are light emitting diodes (LEDs), and most commonly each light source will comprise a plurality of LEDs. The number of LEDs in each light source is not critical, but the first light source most preferably comprises a plurality of red light-emitting diodes, eg 2 to 10, or 4 to 8, such LEDs. Similarly, the second light source most preferably comprises a plurality of white light-emitting diodes, eg 2 to 10, or 4 to 8, such LEDs. The LEDs of each light source are preferably arranged in a row, though other arrangements are also possible.

The light generated by the light sources will generally be compliant with regulations and specifications stipulated by the relevant authorities such as the FAA and the ICAO. The white light generated by the white LEDs will generally have a colour temperature of between 2750K and 10000K, eg between 2750K and 4500K. The red LEDs will generally produce light of wavelength between 620.5nm and 645nm.

Suitable LEDs for use in the PAPI unit of the invention are available from Luminus Devices, Inc, 1100 Technology Park Drive - Unit 2, Billerica, Massachusetts 01821, USA, eg the white LEDs available under the product code SST-90W and the red LEDs available under the product code SST-90R.

Light from the light sources is channelled by means of solid waveguides to the intermediate plane. The waveguides are typically of such a shape and size that light is collected efficiently from the light sources, and that the distal (output) faces of the waveguides define an appropriately shaped field in the intermediate plane. In a typical arrangement, in which each light source comprises a row of five LEDs, the individual LEDs are typically arranged on 25mm centres and so the waveguide typically has a rectangular cross-section, with a width of 125-200mm and a height (thickness) of 20-30mm. Thus, the waveguide usually has a width of 100-250mm, more commonly 125-200mm, and a thickness of 15-50mm, more commonly 20-30mm. The length of the waveguide is not critical, but should be sufficient that the intermediate plane, ie the distal face of the waveguide, is fully illuminated by the light propagated through the waveguide. Typically, the waveguide has a length of 100-200mm, eg about 150mm. Longer waveguides may be used, but at the cost of increasing the overall size of the unit, which may be undesirable.

The waveguides may be of glass, but for reasons of cost the waveguides are preferably formed of synthetic plastics material. The material chosen needs to be sufficiently transmissive to light and to be stable over the operating temperature range of the unit. One suitable plastics material is acrylic. Suitable acrylic waveguides may be prepared by machining of cast acrylic. It is preferred that at least some of the surfaces of the waveguides should be highly uniform, to minimise optical losses. Polishing of the waveguide surfaces may therefore be desirable.

To ensure that the waveguides do not touch and that there is sufficent space to accommodate the light sources and any associated optical components, the waveguides are preferably not disposed parallel to each other, but are slightly angled towards each other. Typically, the angle between the two waveguides is between 0.5° and 4°, eg approximately 2°. Because of this, the distal faces of the waveguides are not perfectly coplanar, but the deviation from planarity is so small that it is not significant. To ensure a distinct transition between the red and white sectors, the output faces of the two waveguides are slightly separated, the separation generally being 1 mm or less, more commonly 0.5mm or less, say 0.05 to 0.5mm, eg about 0.1 mm. In a typical embodiment of the invention, such a gap corresponds to 1 arcminute and so is well within the angle of 3 arcminutes normally specified for the transition between sectors (ie from white to red). In practice, it has been found that the edges of the waveguides may be permitted to touch, imperfections in the edges giving an effective separation of an appropriate magnitude.

In order to maximise the performance of the unit, it is important that as much light as possible is channelled from each LED into the associated waveguide. Light from each LED may be directly coupled into the waveguide. Alternatively, a lens may be used to capture light from each LED for coupling into the waveguide. Tapering of the waveguide may also be used to enhance coupling of light from the LEDs.

In the typical arrangement in which the waveguide has a cross-section of approximately 150 x 25mm and the light source is made up of a row of five LEDs, as much light as possible from each LED needs to be channelled into an area of about 25 x 25mm. This requires an input light cone angle of about 10°, which may be achieved by means of a collimating lens associated with each LED. Such a lens is typically hemispherical in form, which produces a circular input light field. However, as the light is unconfined as it propagates through the waveguide, the light field at the distal face of the waveguide is more uniform. This also has the benefit that the positioning of the LEDs and the collimating lenses is less critical, leading to greater tolerances and hence easier manufacture.

The proximal (input) face of the waveguide may be planar, in which case the light sources (eg LEDs) and associated optical components (eg collimating lenses) are preferably arranged at angles to the proximal (input) face of the waveguide. For reasons of manufacturing simplicity, however, it is preferred for the light sources and associated optical components to be aligned linearly, transverse to the longitudinal axis of the waveguide. In such a case, the proximal (input) face of the waveguide is preferably faceted, the number of facets matching the number of LEDs. Thus, for instance, where there are five LEDs, the input face of the waveguide has five facets. The central facet is parallel to the output face of the waveguide (and to the row of LEDs), the facets on each side of the central facet are disposed at a first angle to the central facet (typically of the order of 2-5°, eg 4°), and the outermost facets are disposed at a second, greater angle (typically of the order of 8-15°, eg 10°).

Applicable standards for PAPI systems generally require the intensity profile of the transmitted light beam to satisfy certain criteria. The intensity profile may be modified by some or all of the following measures:
a) The light sources and associated optical elements (eg collimating lenses) may be slightly offset from the centre of the respective waveguides.
b) Further control of the intensity profile can be achieved electronically, by varying the output of the individual light sources.
c) Imperfections may be introduced into some or all of the surfaces of the waveguides, so as to cause localised optical losses from the waveguides. For instance, some or all of the faces of the waveguide may have roughened surfaces. In one embodiment, where the waveguide has a rectangular cross-section, one major face of the waveguide has a highly polished surface, to minimise optical losses at that surface, while the opposite face and sides are roughened, eg by sand-blasting or a similar process.
d) Positioning of an optical diffuser between the light source and part of the proximal face of the associated waveguide.

The projection lens assembly conveys the image in its focal plane (ie the light field at the distal (output) faces of the waveguides) into the far field, ie in use towards an inbound aircraft. Because the light fields of the two sectors are very close together in the intermediate plane, it is possible to use one projection lens to convey both sectors.

Generally, the diameter of the projection lens will be about 50mm or more, but should be no more than about 200mm, eg about 150mm or 120mm, simply for reasons of cost and compactness. Because simple spherical lenses perform best only at high f-number (the f-number of a lens being the ratio of the focal length to the diameter), the projection lens assembly is preferably a composite lens assembly, most preferably comprising three lens elements. The focal length of the projection lens assembly is preferably in the range 200-400mm, eg about 350mm.

Because the projection lens inverts the image at the intermediate plane, where (as is conventional) the upper sector of the transmitted light beam is white and the lower sector is red, the image at the intermediate plane must be the converse, ie the image at the output face of the upper waveguide is red and that at the output face of the lower waveguide is white.

The light sources (LEDs), associated collimating lenses and waveguides may form part of a sub-assembly that is referred to herein as the "light engine". That sub-assembly and the projection lens assembly may be mounted on an optical bench with formations that cooperate with the components mounted upon to it facilitate correct alignment and spacing of those components.

The PAPI unit preferably incorporates means for leveling the unit and aiming the output light beam at the correct angle. Most conveniently, the unit is provided with legs that are independently height-adjustable for this purpose.

The PAPI unit according to the invention preferably includes a tilt fault detection system consisting of a tilt switch assembly or a clinometer to indicate any deviation from the proper leveling of the unit.

The PAPI unit preferably includes a weatherproof and corrosion-resistant housing. The unit preferably has a weight and dimensions that are such that it can be lifted and installed in position by a single operator.

In the majority of cases, where the PAPI unit according to the invention is installed permanently at a commercial or military airfield, the unit will be powered by the existing main electricity supply by which landing lights and other electrical equipment associated with the runway are powered. In other circumstances, however, eg installation at temporary airfields, the units may be battery-powered, or may be powered by alternative energy sources, such as wind or solar power.

The PAPI unit may comprise a thermostatically controlled heater to prevent ice formation on the lenses.

The invention will now be described in greater detail, by way of illustration only, with reference to the accompanying drawings, in which
Figure 1 illustrates the principle of operation of a PAPI system;
Figure 2 is an exploded view of a PAPI unit in accordance with the present invention;
Figure 3 is an exploded view a light engine forming part of the PAPI unit of Figure 2;
Figure 4 is a schematic plan view of the PAPI unit of Figure 2;
Figure 5 is a schematic side view of the PAPI unit of Figure 2;
Figure 6 shows a first alternative waveguide configuration that could be employed in a PAPI unit according to the invention; and
Figure 7 shows a second alternative waveguide configuration that could be employed in a PAPI unit according to the invention.

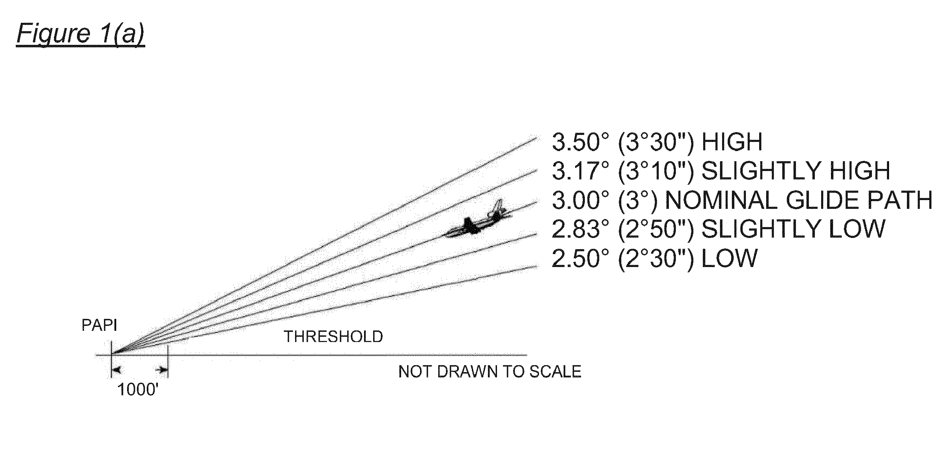

Referring first to the general principle of operation of a PAPI system, Figure 1 (a) shows (schematically and not to scale) an aircraft approaching an airfield runway. The aircraft is shown on its optimal glide angle of 3° to the horizontal, but in practice, without visual guidance, the glide angle may deviate slightly from that optimal value. Such deviations may only be of the order of 0.5° or less, but even such apparently small changes can lead to difficulties in landing the aircraft. This problem is addressed by the PAPI system.

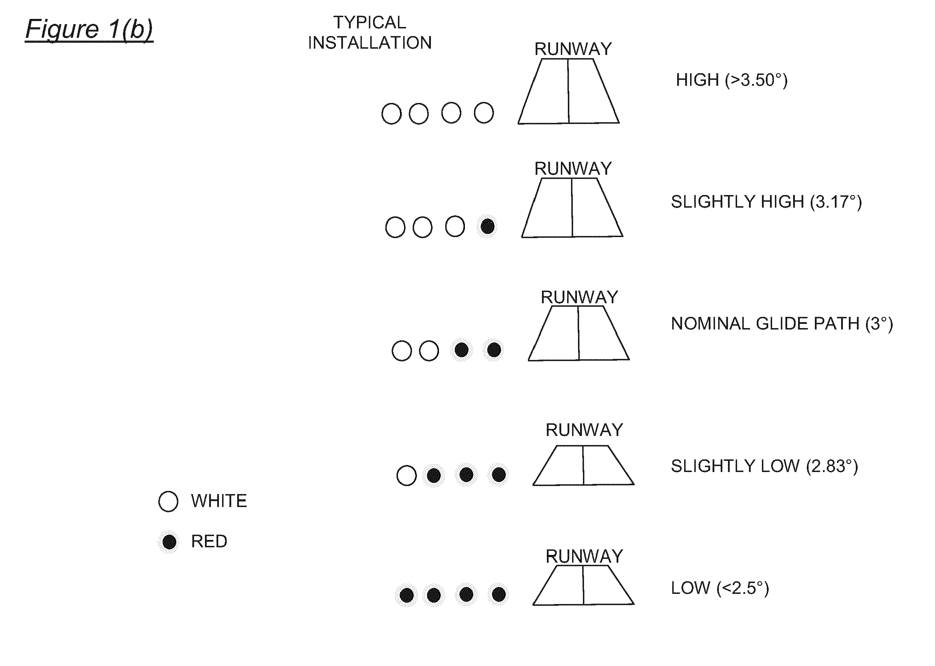

Figure 1 (b) shows schematically a pilot's eye view of such a system. The PAPI system comprises a row of four (or, in the case of an abbreviated PAPI, two) units installed alongside the runway. Each unit emits a horizontally split beam of light, consisting of white light in the upper sector and red light in the lower sector. Two of the units are arranged to transmit at angles slightly greater than the optimal approach angle, and the other two at angles that are slightly smaller than the optimal approach angle. Consequently, when the aircraft is on the correct approach path, the pilot sees two red beams (black circles in Figure 1(b)) and two white beams (open circles in Figure 1(b)). This is indicated by the middle representation in Figure 1(b). If the approach path is too steep, however, the pilot sees three or four white beams (upper representations in Figure 1(b)); if the approach path is too shallow, the pilot sees three or four red beams (lower representations in Figure 1(b)).

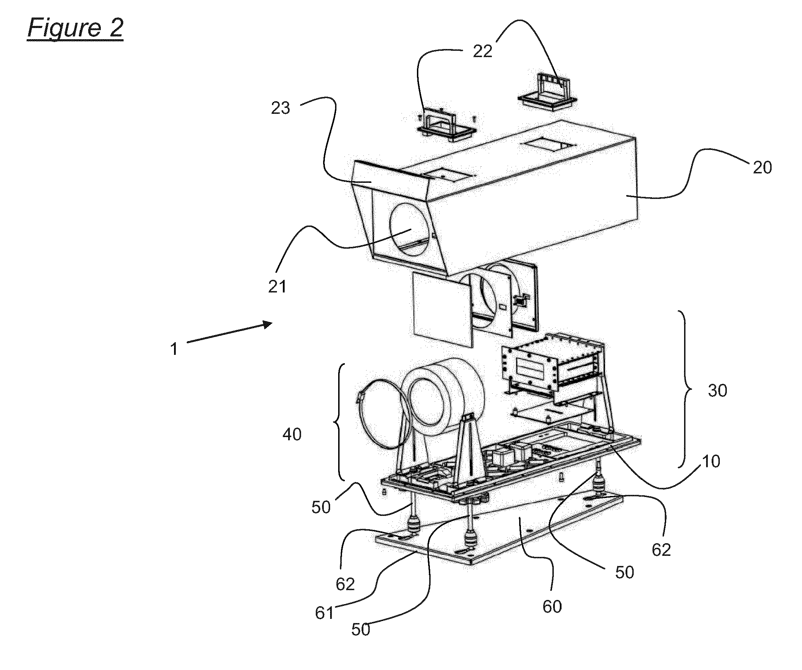

Turning now to Figure 2, a PAPI unit according to the invention, generally designated 1, comprises a weatherproof enclosure formed from an optical bench 10 and housing shell 20 that is supported by adjustable legs 50. The sides and top of the housing shell 20 project beyond the front wall, to form an overhang which inhibits entry of rain into the interior. The front edge of the top of the housing shell 20 is formed with an upstanding deflection plate 23, the purpose of which is to prevent an approaching pilot seeing light reflected off the top of the unit 1.

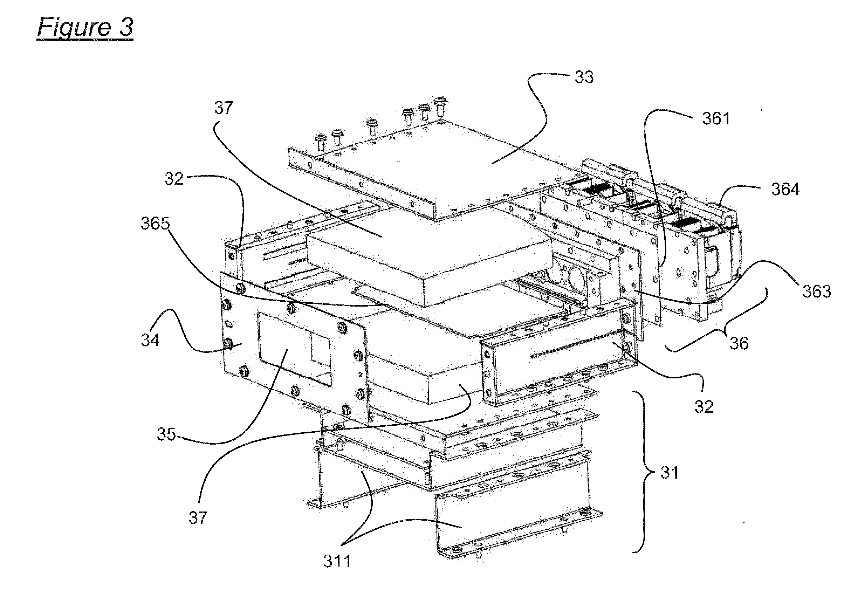

Figure 2 shows the PAPI unit 1 in exploded form, revealing the following major sub-assemblies, both of which are carried on the optical bench 10:
- a "light engine" 30, the structure of which is described more fully with reference to Figure 3; and
- a projection lens assembly 40.

The unit 1 is, in use, engaged with a ground fixing plate 60 that is generally trapezoidal in shape and is intended to be fixed to an appropriate support, typically a concrete pad, alongside an airfield runway, with the front edge 61 of the plate 60 arranged perpendicular to the runway. The plate 60 is formed with keyhole-shaped locating holes 62 for the feet of the legs 50, such that the unit 1 can be engaged with the plate 60 by insertion of the feet into the enlarged forward parts of the holes 62 and pressed backwards. Similarly, the unit 1 can be easily released from the plate 60, eg for maintenance. Nonetheless, when engaged with the plate 60, the unit 1 is held securely in a fixed position and orientation.

The housing shell 20 is downwardly open and cooperates with the optical bench 10 to form a substantially fully enclosed housing. The front wall of the housing shell 20 is formed with a circular opening 21 through which, in use, a light beam is emitted from the unit 1. A pair of handles 22 are fitted to the upper wall of the housing shell 20, to facilitate handling of the unit 1, eg during engagement with, or disengagement from, the fixing plate 60.

The housing shell 20 encloses two principal sub-assemblies, both of which are carried by the optical bench 10. These sub-assemblies are the "light engine" 30 and the projection lens assembly 40.

The light engine 30 is shown in exploded view in Figure 3. It comprises a substantially cuboidal box formed from a base assembly 31, side walls 32, a top plate 33, a front plate 34 including an aperture 35 and a rear plate/LED mounting assembly 36. The base assembly 31 includes a pair of spacer plates 311 that are bolted to the mounting base 10.

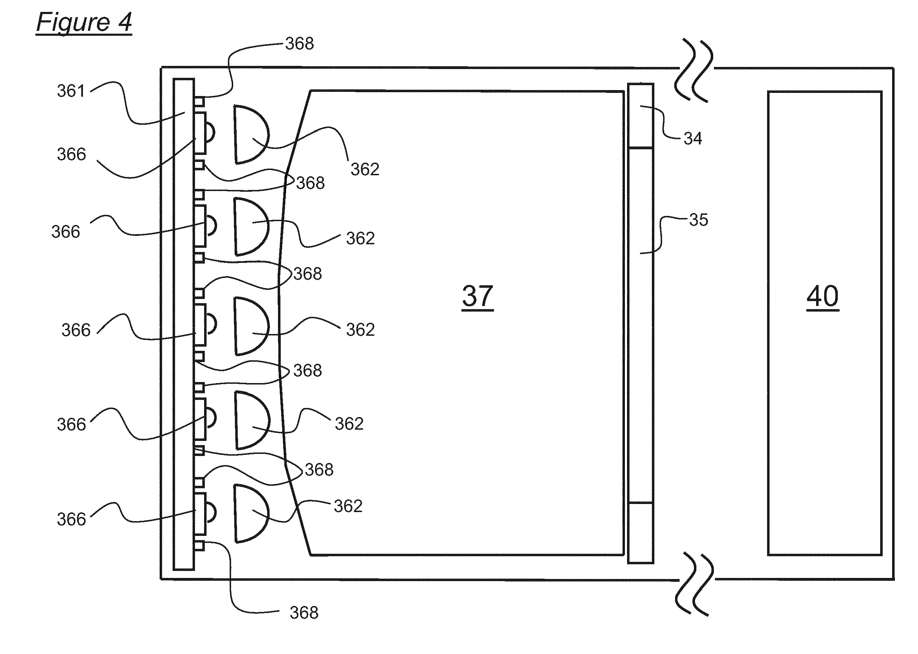

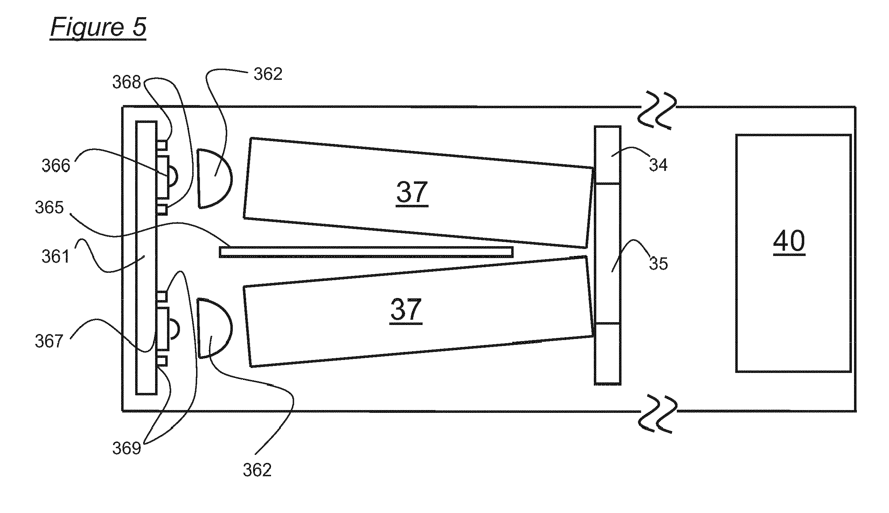

The rear plate/LED mounting assembly 36 includes a printed circuit board (PCB) 361 on which two rows of five light emitting diodes (LEDs; not visible in Figure 3) are mounted. The upper row of LEDs emit red light, and the lower row emit white light. As is explained below with reference to Figures 4 and 5, each LED is associated with a collimating lens 362, each collimating lens 362 being held in a fixed spaced-apart position relative to the LEDs by a lens holder 363. A heat sink 364 with associated fans is mounted behind the PCB 361.

The light engine 30 includes two waveguides 37, one of which is associated with the upper row of (red) LEDs and the other with the lower row of (white) LEDs. The two waveguides 37 are identical and are formed of cast acrylic material. Each waveguide 37 is of rectangular cross-section and is generally cuboidal in form, save that the rear face that is disposed in juxtaposition to the associated collimating lenses has five facets. The central facet is parallel to the front face of the waveguide 37, the facets either side of the central facet are disposed at 4° to the central facet, and the outermost facets at 10° (as is most clearly seen in Figure 4). The waveguides 37 are approximately 180mm in width, with a length of approximately 150mm and a thickness of approximately 25mm.

For convenience, the upper row of (red) LEDs with their associated collimating lenses 362 and waveguide 37 are referred to herein as the "upper sector" or "red sector" of the light engine 30, and the lower row of (white) LEDs and their associated collimating lenses 362 and waveguide 37 as the "lower sector" or "white sector".

The lens holder 363 includes a slotted, forwardly-projecting shelf 364 in which is located a divider 365 that is intended to block stray light that might otherwise be transmitted from one sector to another (ie between the upper (red) sector and the lower (white) sector).

The construction of the light engine 30 is shown in more simplified fashion in Figures 4 and 5. Figure 4 is a schematic view of the light engine from above, ie showing the red sector, and Figure 5 a similarly schematic view from the side.

Figure 4 shows the PCB 361 with the upper row of five red LEDs 366, each with an associated collimating lens 362. The collimating lenses 362 are identical and essentially hemispherical. A waveguide 37 is positioned in front of the collimating lenses 362, with the five facets of its rear face in juxtaposition with the collimating lenses.

The arrangement of the lower sector is substantially the same as for the upper sector. As can be seen from Figure 5, the white LEDs 367 are each associated with a collimating lens 362 and a waveguide 37 is positioned in front of the collimating lenses, as in the upper sector. The divider 365 is positioned between the waveguides 37 and prevents transmission of any stray light from the red sector to the white sector, or vice versa.

Light emitted by the LEDs 366,367 is directed by the collimating lenses 362 onto the rear face of the waveguides 37, and propagates through the waveguides 37 by total internal reflection. The light is allowed to spread unconfined in the transverse direction, which reduces the required tolerances in the positioning of the LEDs 366,367 and of the collimating lenses 362. In the vertical direction, the light is confined by the depth of the waveguide 37, and the length of the waveguide 37 is sufficient that its distal end is illuminated fully and uniformly by the light from the LEDs 366,367. In the illustrated embodiment, the dimensions of the waveguides 37 are approximately 15cm x 18cm x 2.5cm (length x width x depth).

The LEDs 366,367 and the collimating lenses 362 are slightly offset from the centre of the respective waveguides 37, in order to achieve the required intensity profile of the transmitted light beam. Further control of the intensity profile can be achieved electronically, by varying the output of the individual LEDs 366,367. In addition, referring to the upper (as viewed in Figure 3) waveguide 37, the top surface and each side of the waveguide 37 are roughened by sand-blasting, whereas the other faces are highly polished. This results in greater optical losses at the top and sides of the waveguide, which affects the intensity profile of the light beam at the distal face of the waveguide 37. The lower (as viewed in Figure 3) waveguide 37 is identical, save that it is the bottom face and sides that are roughened, rather than the top and sides.

To ensure that the waveguides 37 do not touch and that there is sufficent space to mount the collimating lenses 362, the waveguides 37 are not disposed parallel to each other, but are slightly angled towards each other. In Figure 5, the angle is exaggerated; the angle between the two waveguides is approximately 2°. Because of this, the faces of the waveguides 37 that are remote from the LEDs 366,367 are not perfectly coplanar, but the deviation from planarity is so small that it is not significant and the end faces of the waveguides 37 can be treated as an optical plane. In Figure 5, a gap is shown between the distal ends of the waveguides 37. Again, that gap is exaggerated in the drawing. In reality, the gap is approximately 100µm, which corresponds to 1 arcminute and so is well within the angle of 3 arcminutes normally specified for the transition between sectors (ie from white to red). In practice, it has been found that the edges of the waveguides 37 may be permitted to touch, imperfections in the edges giving an effective separation of an appropriate magnitude.

The effect of the waveguides 37 is to channel light emitted by the LEDs 366,367 to the optical plane defined by the distal ends of the waveguides 37. That plane is adjacent to the front plate 34 of the light engine 30, which contains the window 35. The shape of the window 35 defines the shape (ie the width and height) of the image at the intermediate plane that is transmitted by the projection lens assembly 40.

The optical plane defined by the ends of the waveguides 37 lies in the focal plane of the projection lens assembly 40. The projection lens assembly 40 includes a three component lens of conventional form. The lens has a diameter of 120mm and a focal length of 350mm.

In use, the PAPI unit 1 of the invention is used in a similar manner to in which a conventional PAPI unit is used. Briefly summarised, four PAPI units 1 are installed alongside and perpendicular to an airfield runway. Each PAPI unit 1 projects a beam of light that has a white upper sector and a red lower sector. Two of the units 1 are aligned so that the centre line of the projected beam is above the optimum glide slope for incoming aircraft, and two are aligned so that the centre line of their projected beam is slightly below that glide slope. In the unit 1 of the invention, the light beams are formed by light emitted by the red LEDs 366 and the white LEDs 367 being channelled by their respective waveguides 37 to an intermediate plane defined by the distal ends of the waveguides 37. The image that is formed at that plane comprises a rectangular beam in the upper sector and a rectangular white output beam in the lower sector. That image lies at the focal plane of the projection lens assembly 40, which inverts the image and projects the beams towards incoming aircraft.

A feature of the PAPI unit 1 that has not hitherto been described is the presence of alternative light sources for use at night. These light sources are auxiliary LEDs 368 in the upper sector of the light engine 30 (see Figure 4) and auxiliary LEDs 369 in the lower sector (see Figure 5). The auxiliary LEDs emit infra-red light that can be observed with night vision equipment (eg night vision goggles). In order to provide the necessary differentiation between the two sectors, the auxiliary LEDs 368 in the upper sector are occulting (ie intermittent) whereas the auxiliary LEDs 369 in the lower sector operate continuously.

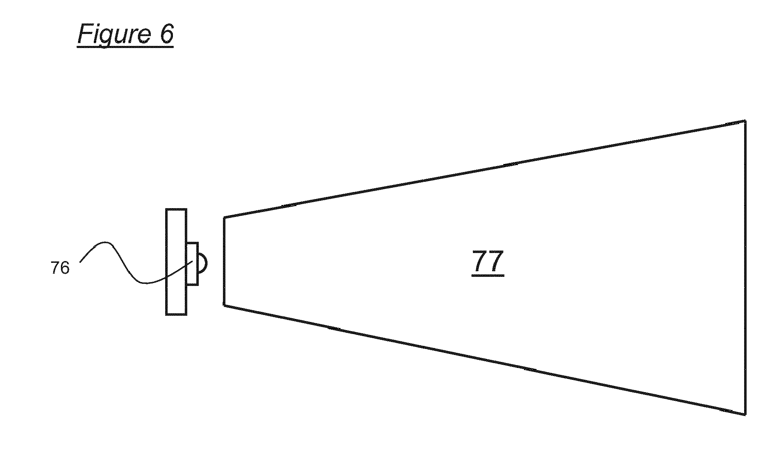

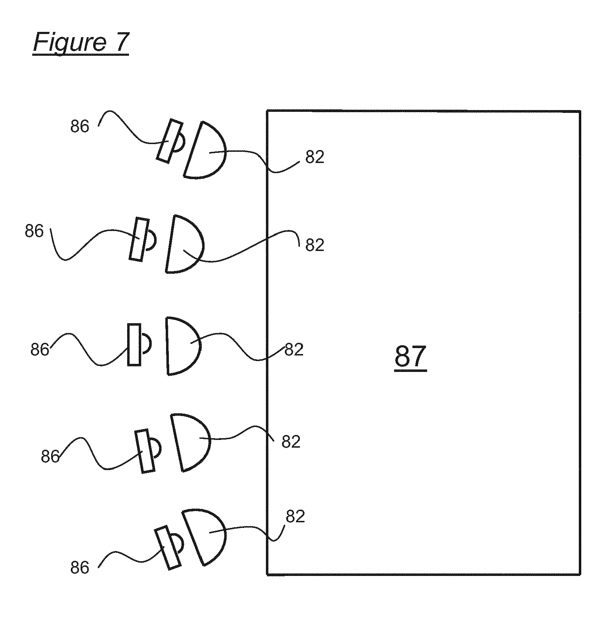

Finally, Figures 6 and 7 illustrate waveguide configurations that are alternatives to the waveguide configuration shown in Figures 4 and 5, ie a configuration in which the LEDs and collimating lenses are positioned linearly and the input face of the waveguide is faceted.

In the arrangement shown in Figure 6, the waveguide 77 is tapered. The taper acts as an efficient way of reducing the angular output from the LED 76 along the waveguide 77. This works most effectively, the closer the LED 76 can be placed to the input face of the waveguide 77 and therefore the smaller the input face can be. However, LEDs conventionally are fitted with silicone domes that increase the light output of the LED, typically by about 25% for white LEDs and considerably more for red LEDs. This increases the separation of the LED 76 and the input face of the waveguide 77, and hence the required size of the input face. This decreases the efficiency of the tapered waveguide compared to the faceted waveguide of Figures 4 and 5. Also, the tapered waveguide 77 requires more complex mountings, and the contact between those mountings and the waveguide 77 itself couples light out of the waveguide and so reduces the amount of light transmitted.

Figure 7 shows a waveguide 87 with a planar input face, but where the LEDs 86 and associated collimating lenses 82 are arranged at angles to the input face. The central LED 86 and collimating lens 82 are disposed parallel to the input face, but the adjacent LEDs 86 and collimating lenses 82 are disposed at a first angle to the central LED and lens, and the outermost LEDs and lenses are disposed at a second, greater, angle. This arrangement is optically substantially equivalent to that of Figures 4 and 5, but is mechanically more complex.

Although currently preferred embodiments of the invention have been depicted and described in detail herein, it will be apparent to those skilled in the art that various modifications, additions, substitutions, and the like may be made without departing from the spirit of the invention and these are therefore within the scope of the invention as defined in the claims which follow.

## Claims

1. A Precision Approach Path Indicator (PAPI) unit, said unit comprising first and second light sources and a projection lens assembly, wherein light emitted by the first and second light sources is collected by first and second solid waveguides respectively and is guided by said waveguides to an intermediate plane, said intermediate plane being located in the focal plane of the projection lens assembly.

2. A PAPI unit as claimed in Claim 1, wherein the light sources are non-incandescent light sources.

3. A PAPI unit as claimed in Claim 2, wherein the light sources comprise light emitting diodes (LEDs).

4. A PAPI unit as claimed in Claim 3, wherein the first light source comprises a plurality of red LEDs, and the second light source comprises a plurality of white LEDs.

5. A PAPI unit as claimed in Claim 3 or Claim 4, wherein the LEDs of each light source are arranged in a row.

6. A PAPI unit as claimed in any preceding claim, wherein the waveguides are of rectangular cross-section, with a width of 100-250mm, a thickness of 15-50mm, and a length 100-200mm.

7. A PAPI unit as claimed in any preceding claim, wherein the waveguides are formed of synthetic plastics material.

8. A PAPI unit as claimed in Claim 7, wherein the synthetic plastics material is acrylic.

9. A PAPI unit as claimed in any preceding claim, wherein the waveguides are angled towards each other, the angle between the two waveguides being between 0.5° and 4°.

10. A PAPI unit as claimed in Claim 9, wherein the output faces of the two waveguides are separated, the separation being from 0.05mm to 1 mm.

11. A PAPI unit as claimed in any one of Claims 3 to 5, wherein a collimating lens is associated with each LED, to couple light into the waveguides.

12. A PAPI unit as claimed in Claim 11, wherein the proximal (input) face of the waveguide is faceted, the number of facets matching the number of LEDs.

13. A PAPI unit as claimed in any preceding claim, which each of the first and second light sources comprises auxiliary light sources that may be visualised using night vision equipment.

14. A PAPI unit as claimed in any preceding claim, wherein the output faces of the waveguides lie in the intermediate plane.

15. A Precision Approach Path Indicator (PAPI) system comprising a plurality of PAPI units according to any preceding claim.
